# EUROPÄISCHE PATENTSCHRIFT

(11) **EP 4 040 255 B1**
(45) Veröffentlichungstag und Bekanntmachung des Hinweises auf die Patenterteilung: **07.05.2025**
(21) Anmeldenummer: 22153420.9
(22) Anmeldetag: 26.01.2022
(51) Int. Cl.: G05D 1/00

(54) **SYSTEM ZUM DURCHFÜHREN VON ARBEITSABLÄUFEN IN EINEM LOGISTIKUMFELD**
SYSTEM FOR PERFORMING OPERATIONS IN A LOGISTICS ENVIRONMENT
SYSTÈME DE MISE EN OEUVRE DES FLUX DE TRAVAIL DANS UN ENVIRONNEMENT LOGISTIQUE

(30) Priorität: 03.02.2021 DE 102021102461
(43) Veröffentlichungstag der Anmeldung: 10.08.2022
(73) Patentinhaber: Jungheinrich Aktiengesellschaft, 22047 Hamburg (DE)
(72) Erfinder: SCHARF, Florian, 84076 Pfeffenhausen (DE); SCHÖNAUER, Michael, 85368 Moosburg (DE); SCHÖTTKE, Carsten, 85368 Moosburg (DE); RÖSCH, Daniel, 81677 München (DE)
(74) Vertreter: Weickmann & Weickmann PartmbB

(56) Entgegenhaltungen:
- US-A1- 2013 190 963
- US-A1- 2019 135 598

## Beschreibung

Die vorliegende Erfindung betrifft ein System zum Durchführen von Arbeitsabläufen in einem Logistikumfeld, umfassend eine Lasttransportvorrichtung und eine von der Lasttransportvorrichtung entfernte Bedieneinrichtung.

Es ist aus Gründen der Steigerung der Effizienz von Arbeitsabläufen in Logistikumfeldern in jüngerer Zeit ein deutlicher Trend zu einer erhöhten Automatisierung und Autarkie von mit solchen Prozessen befassten Arbeitsgeräten zu beobachten. Insbesondere sind sogenannte fahrerlose Transportsysteme momentan ein dominierendes Thema, mit welchen vorgegebene Abläufe ausgeführt werden können und die hierbei für einen möglichst autonomen Betrieb mit einer hochintegrierten Sensorik und Aktorik sowie geeigneten Steuereinrichtungen und Kommunikationsschnittstellen ausgerüstet sind. Es zeigt sich jedoch in diesem Zusammenhang, dass die Komplexität der Aufgaben, die von derartigen Vorrichtungen oder auch von anderen automatisierten oder autarken Einrichtungen durchgeführt werden können, in der Praxis begrenzt ist, da zum automatisierten Durchführen noch komplexerer Aufgaben ein unvertretbar oder unverhältnismäßig großer Aufwand bei der Ausrüstung und Programmierung der entsprechenden Komponenten betrieben werden müsste. Beispiele für vollautomatische oder vollautarke derartige Vorrichtungen sind beispielsweise aus der DE 10 2015 220 091 A1 und der US 10,147,069 B2 bekannt.

Ferner sei auf die US 2013/190 963 A1 sowie die US 2019/135 598 A1 verwiesen, welche jeweils gattungsgemäße Systeme offenbaren.

Die vorliegende Erfindung ist demzufolge auf die Aufgabenstellung gerichtet, im Wesentlichen beliebig komplexe Aufgaben und Arbeitsabläufe in einem Logistikumfeld mittels einer Lasttransportvorrichtung, welche beispielsweise durch ein Flurförderzeug oder ein Regalbediengerät gebildet sein kann, durchführen zu können, ohne dass hierzu ein unverhältnismäßig großer Aufwand zur vollständigen Automatisierung derartiger Abläufe betrieben werden müsste. Ein einfaches Beispiel kann die Handhabung von ungenormten Containern oder anderen unregelmäßig geformten Gütern sein, d.h. Ware, bei der sich die Zustandsform ändert, oder beispielsweise auch von Kugelware, die sich undefiniert in einem Lagerfach befindet oder bewegt und die deshalb nur schwierig eigenständig kommissioniert werden kann. Zwar ist es unter Umständen denkbar, auch solche Waren automatisiert zu handhaben, hierbei muss jedoch eine Vielzahl von möglichen Zuständen und Arbeitsweisen bei der Ausrüstung und Programmierung der entsprechenden Anlage bedacht werden, und es bleiben dennoch vielerlei Gefahren hinsichtlich Fehlbedienungen, da in der Praxis nicht alle Eventualitäten zuvor bedacht werden können. Weiterhin sind auch noch vielerlei andere Beispiele denkbar, in welchen automatisierte oder autonome Einrichtungen in Logistikanlagen vor dem Hintergrund des Bestrebens nach einer weiteren Automatisierung auch von komplexen Vorgängen an ihre wirtschaftlich vertretbaren Grenzen stoßen.

Das erfindungsgemäße System zum Durchführen von Arbeitsabläufen in einem Logistikumfeld umfasst zur Lösung der eben umrissenen Aufgabe eine Lasttransportvorrichtung, wiederum umfassend eine zentrale Steuereinheit, wenigstens eine Kommunikationseinheit, wenigstens eine optische Kamera, eine Mehrzahl von durch die zentrale Steuereinheit betreibbaren Aktoren und/oder Arbeitsgeräten, und wenigstens eine Sensoreinheit zum Erfassen von Betriebsparametern der Lasttransportvorrichtung und/oder Eigenschaften der Umgebung der Lasttransportvorrichtung , welche betriebsmäßig mit der zentralen Steuereinheit gekoppelt ist, wobei die Lasttransportvorrichtung dazu eingerichtet ist, wenigstens zeitweise anhand von über die Kommunikationseinheit übertragenen Arbeitsanweisungen mittels der Steuereinheit und den Aktoren in einem autonomen Modus betrieben zu werden, sowie eine von der Lasttransportvorrichtung entfernte Bedieneinrichtung, umfassend eine Kommunikationseinheit, welche mit der Kommunikationseinheit der Lasttransportvorrichtung in bidirektionaler Datenverbindung zur Übertragung von Bild- und Steuerdaten steht, eine Anzeigeeinheit, welche dazu eingerichtet ist, von der optischen Kamera der Lasttransportvorrichtung aufgenommene und mittels der Kommunikationseinheit übertragene Bilddaten anzuzeigen, und eine Bedieneinheit, welche dazu eingerichtet ist, Steuerbefehle von einem Bediener entgegenzunehmen, welche daraufhin mittels der Kommunikationseinheiten zu der Lasttransportvorrichtung übertragen werden. Hierbei ist erfindungsgemäß die zentrale Steuereinheit der Lasttransportvorrichtung ferner dazu eingerichtet, auf Grundlage von durch die Sensoreinheiten vorgenommenen Erfassungen und wenigstens einem vorbestimmten Kriterium die Lasttransportvorrichtung von dem autonomen Modus in einen ferngesteuerten Modus zu überführen, in welchem der Betrieb der Lasttransportvorrichtung anhand von an der entfernten Bedienvorrichtung eingegebenen Steuerbefehlen steuerbar ist.

Demzufolge besteht ein wesentlicher Aspekt der vorliegenden Erfindung darin, eine zunächst einmal in einem autonomen Modus betreibbare Lasttransportvorrichtung mit allen hierzu notwendigen Komponenten bereitzustellen, welche darüber hinaus in der Lage ist, vorgegebene Zustände oder Bedingungen zu erkennen, in welchen ein manueller Eingriff durch einen entfernten menschlichen Bediener notwendig ist, wobei das erfindungsgemäße System diesen menschlichen Bediener dann in einem ferngesteuerten Modus ein Anweisen der entsprechenden Funktionen der Lasttransportvorrichtung erlaubt und eine optische Rückmeldung mittels der optischen Kamera der Lasttransportvorrichtung und der Anzeigeeinheit der entfernten Bedieneinrichtung gegeben wird. Hierbei können die entsprechenden Erfassungen durch die wenigstens eine Sensoreinheit beispielsweise periodisch mit einer vorgebbaren oder anpassbaren Frequenz vorgenommen und mit dem wenigstens einen vorbestimmten Kriterium verglichen werden. Gleichzeitig sollen jedoch auch Ausführungsbeispiele umfasst sein, in welchen beispielsweise durch eine externe Einheit ein Zustand der Lasttransportvorrichtung erfasst wird, beispielsweise ein Aufenthalt davon an einem vorbestimmten Ort, durch welchen ein Umschalten in den ferngesteuerten Modus ausgelöst werden soll. In solch einem Beispiel kann dann die wenigstens eine Sensoreinheit sogar physisch entfernt von der Lasttransportvorrichtung vorliegen, wobei sie aus Gründen der Übersichtlichkeit und Lesbarkeit der vorliegenden Anmeldung doch als Teil davon angesehen und behandelt wird.

Im oben bereits kurz angesprochenen Beispiel von ungenormten Behältern wird erfindungsgemäß bei einem Erfassen eines derartigen Behälters und unter Kenntnis der Arbeitsanweisung, den entsprechenden Behälter zu kommissionieren, die Vorrichtung vom autonomen Modus in den ferngesteuerten Modus umschalten und ein entfernter Bediener kann mittels über die Bedieneinheit eingegebener Steuerbefehle ein entsprechendes Arbeitsgerät an der Lasttransportvorrichtung in einer geeigneten Weise für den Kommissioniervorgang ansteuern.

Hierbei kann für die beiden miteinander in Verbindung stehenden Kommunikationseinheiten auf bekannte Protokolle und Standards zurückgegriffen werden, beispielsweise können Technologien wie IEEE-802.11, TCP/IP und 4G/5G oder auch proprietäre Standards zur Übertragung des Kamerabilds und der Steuerbefehle eingesetzt werden, wobei selbstverständlich ferner auch noch weitere Daten übertragen werden können, beispielsweise Telemetrie- und/oder Sensordaten der Lasttransportvorrichtung oder anderer Komponenten der Logistikeinrichtung, die ebenfalls dem menschlichen Bediener in einer geeigneten Weise dargestellt werden können, um ihn bei der Fernsteuerung der Lasttransportvorrichtung zu unterstützen.

Hierzu kann die Anzeigeeinheit der entfernten Bedieneinrichtung entsprechend den wiederzugebenden Daten und Bildformaten ausgestattet sein und beispielsweise durch den Monitor eines Endgeräts, wie einem Personal Computer, oder auch eine VR-Brille gebildet sein.

Hinsichtlich der in der Lasttransportvorrichtung einsetzbaren Typen von Sensoreinheiten besteht zunächst einmal keinerlei Einschränkung und es kann auf eine Vielzahl von Sensortypen zurückgegriffen werden, beispielsweise Positionssensoren, Lagesensoren, Sensoren zur Überwachung von Arbeitsfunktionen, optische Sensoren, akustische Sensoren und Abstandssensoren. Zudem kann die Lasttransportvorrichtung und/oder die entfernte Bedieneinrichtung weitere Sensordaten oder auch Bilddaten von Sensoren oder Kameras erhalten und verarbeiten, die externen Komponenten der Logistikeinrichtung zugeordnet und damit statisch gegenüber der beweglichen Lasttransportvorrichtung sind, um damit den autonomen Betrieb der Lasttransportvorrichtung und/oder die Fernsteuerung der Lasttransportvorrichtung durch den menschlichen Bediener mittels zusätzlicher externer Daten zu vereinfachen, sicherer zu machen oder Ähnliches.

In ähnlicher Weise können die von der zentralen Steuereinheit betreibbaren Aktoren und/oder Arbeitsgeräte ebenfalls aus einer Vielzahl von bekannten Typen derartiger Komponenten ausgewählt werden, die beispielsweise in aus dem Stand der Technik bekannten vollautonomen oder autarken fahrerlosen Transportsystemen bereits eingesetzt werden. Hierbei kann es sich beispielsweise um ein Antrieb- und Lenksystem der Lasttransportvorrichtung, einen Manipulator, ein Hubgerüst, ein Seitenschubgerät oder individuelle, einen Teil dieser Komponenten bildende Aktoren handeln. Die Auswahl und Anzahl der derart steuerbaren Komponenten ist folglich lediglich auf die für das erfindungsgemäße System konkret vorgesehenen Einsatzzwecke und Szenarien abzustimmen.

Ähnliches gilt für die Bedieneinheit der entfernten Bedieneinrichtung, welche beispielsweise einen Joystick, ein Lenkrad, einen Datenhandschuh und/oder einen Touchscreen umfassen kann, so dass für unterschiedliche zur Fernsteuerung vorgesehene Aktoren und/oder Arbeitsgeräte unterschiedliche Eingabegeräte denkbar sind.

In einer vorteilhaften Ausführungsform kann ferner die optische Kamera der Lasttransportvorrichtung mittels der Bedieneinheit ausrichtbar und/oder einstellbar sein, so dass der mit der Fernsteuerung betraute menschliche Bediener das Sichtfeld, das auf seiner Anzeigeeinheit angezeigt wird, innerhalb vorgegebener Parameter anpassen kann und beispielsweise herein- oder herauszoomen kann, um Details zu erkennen oder einen besseren Überblick über die momentan aufgenommene Szenerie zu erhalten.

Des Weiteren kann dem erfindungsgemäßen System ein Lagerverwaltungssystem zugeordnet sein, welches über eine Kommunikationseinheit wiederum mit der Kommunikationseinheit der Lasttransportvorrichtung in Datenverbindung steht und dazu eingerichtet ist, Arbeitsanweisungen an die Lasttransportvorrichtung zu senden. Auch hier kann prinzipiell auf an sich bekannte Technologien zurückgegriffen werden, da das Lagerverwaltungssystem grundsätzlich nicht mit dem erfindungsgemäßen Umschalten zwischen autonomem und ferngesteuertem Betrieb betraut ist. Dennoch erlaubt die oben beschriebene Technik das Ausführen komplexerer Vorgänge durch das Hinzuziehen des menschlichen Bedieners, wodurch bisher noch nicht von Lagerverwaltungssystemen verwirklichte Abläufe und Vorgänge möglich werden können. Entsprechende Arbeitsanweisungen können sich demzufolge auf einem relativ niedrigen Niveau abspielen, beispielsweise lediglich eine Anweisung für eine Lasttransportvorrichtung enthalten, sich innerhalb einer Logistikeinrichtung an eine bestimmte Position zu bewegen, oder auch komplexe Aufgaben, wie das Aufnehmen einer Ware an einem vorgegebenen ersten Punkt, ggf. unter Identifizierung der Ware aus einer Mehrzahl von an der entsprechenden Position vorliegenden Warenstücken und ein anschließendes Transportieren und Übergeben der vorgegebenen Ware an eine durch eine zwischenzeitliche Fahrt zu erreichenden Position, wobei über den Übergang in den ferngesteuerten Modus dann fahrzeugseitig unter den oben beschriebenen Gesichtspunkten entschieden wird.

Weiterhin bietet das erfindungsgemäße System die Möglichkeit, mehrere Lasttransportvorrichtungen und eine einzelne entfernte Bedienvorrichtung sowie ggf. das eben angesprochene einzelne Lagerverwaltungssystem zu kombinieren, wobei die Lasttransportvorrichtungen einzeln selektiv in dem ferngesteuerten Modus betreibbar sind. Somit wird die Effizienz des erfindungsgemäßen Systems dahingehend verbessert, dass ein einzelner menschlicher Bediener mehrere Lasttransportvorrichtungen in entsprechenden ferngesteuerten Modi bedienen kann, so dass keine eins-zueins-Zuordnung zwischen Lasttransportvorrichtung und entferntem Bediener notwendig ist. Selbstverständlich könnten hierbei auch mehrere entfernte Bedienvorrichtungen für eine größere Zahl von Lasttransportvorrichtungen vorgesehen sein, wobei in jedem Fall die Abarbeitung von durch den oder die menschliche Bediener fernzusteuernden Arbeitsabläufen über geeignete Algorithmen eingereiht und/oder verteilt werden kann, beispielsweise Arbeitsschritte mit einer höheren Dringlichkeit höher priorisiert werden und damit zu einer früheren Zeit abzuarbeiten sind oder nach einem strengen First-In-First-Out-Stapelverarbeitungsprinzip.

Weiterhin sei festgehalten, dass das erneute Umschalten von dem ferngesteuerten Betrieb in den autonomen Betriebsmodus auf verschiedene Weisen stattfinden kann, beispielsweise durch eine entsprechende Eingabe des Bedieners, wenn dieser der Ansicht ist, dass die von ihm auszuführende und ferngesteuerte Tätigkeit abgeschlossen ist, oder ebenfalls durch die Erfassung eines solchen Zustands durch eine der Sensoreinheiten.

Weitere Merkmale und Vorteile der vorliegenden Erfindung werden aus der nachfolgenden Beschreibung eines Ausführungsbeispiels noch deutlicher, wenn diese gemeinsam mit den beiliegenden Figuren betrachtet wird. Diese zeigen im Einzelnen:
- Fig. 1: eine schematische Darstellung der Komponenten eines erfindungsgemäßen Systems;
- Fig. 2: ein Flussdiagramm eines Verfahrens zum Betreiben des Systems aus Figur 1; und
- Fig. 3: eine schematische Darstellung einer Ausführungsform einer Lasttransportvorrichtung und einer entfernten Bedieneinrichtung aus dem System aus Fig. 1.

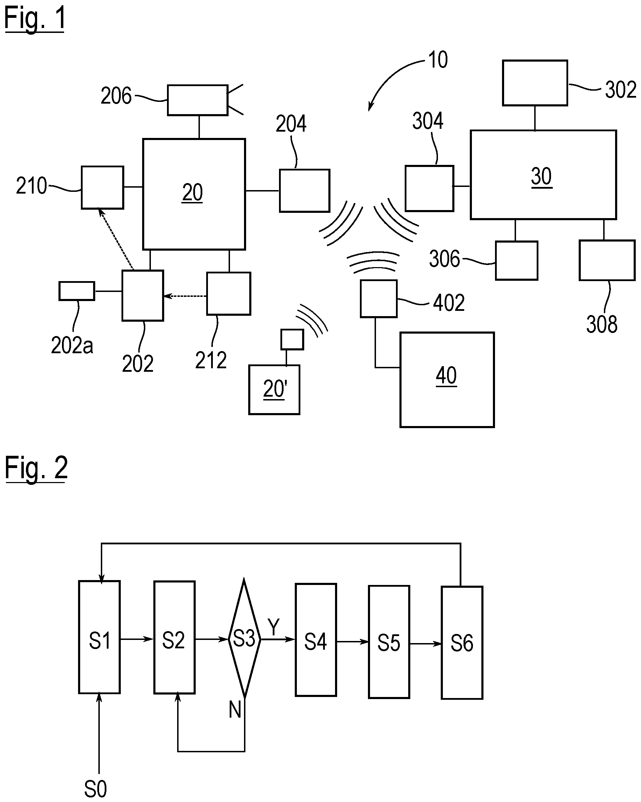

In Figur 1 ist zunächst in einer schematischen Darstellung ein erfindungsgemäßes System 10 gezeigt, welches ein als Lasttransportvorrichtung im Sinne der vorliegenden Erfindung wirkendes Flurförderzeug 20, eine von dem Flurförderzeug 20 entfernte Bedieneinrichtung 30 und ein Lagerverwaltungssystem 40 umfasst. Hierbei ist zu beachten, dass die Lasttransportvorrichtung alternativ beispielsweise auch durch ein Regalbediengerät oder ähnliches gebildet sein könnte.

Das Flurförderzeug 20 umfasst wiederum eine zentrale Steuereinheit 202, welche sämtliche Datenverarbeitungsaufgaben innerhalb des Flurförderzeugs 20 übernimmt und entweder monolithisch aufgebaut sein kann oder auf mehrere Untereinheiten, beispielsweise eine Mehrzahl von Mikrochips, verteilt sein kann. Hierzu umfasst die zentrale Steuereinheit 202 auch noch wenigstens ein Speicherelement 202a, in welchem einerseits funktionelle Software zum Betrieb der einzelnen Funktionen der Steuereinheit 202 abgelegt ist und in welchem ferner weitere spezifische Daten einer Logistikeinrichtung hinterlegt sein können, beispielsweise Topologiedaten und Ähnliches. Ferner sind in der Speichereinheit 202 im Rahmen des erfindungsgemäßen Verfahrens Daten hinterlegt, welche die vorbestimmen Kriterien zur Überführung des Flurförderzeugs 20 vom autonomen in den ferngesteuerten Modus betreffen.

Weiterhin umfasst das Flurförderzeug 20 wenigstens eine Kommunikationseinheit 204, welche zur Verwendung von an sich bekannten Kommunikationsprotokollen sowohl öffentlicher wie proprietärer Natur eingerichtet sein kann. Beispielsweise können üblicherweise zur Übertragung von großen Mengen an Daten eingesetzte Protokolle wie IEE-802.11 oder 4G/5G zum Einsatz kommen.

Hierbei ist eine der Datenquellen, deren Daten über die Kommunikationseinheit 204 übertragen werden sollen, eine optische Kamera 206, welche an einer geeigneten Position an dem Flurförderzeug 20 zum Durchführen des erfindungsgemäßen Verfahrens angeordnet ist. Diese optische Kamera 206 kann ferner in einer fernsteuerbar bewegbaren Weise an das Flurförderzeug 20 gekoppelt sein, sodass mittels der weiter unten beschriebenen entfernten Bedieneinrichtung 30 die genaue Position und der Blickwinkel der optischen Kamera 206 innerhalb vorgegebener Grenzen durch den Bediener der entfernten Bedieneinrichtung 30 einstellbar sein kann.

Weiterhin sind dem Flurförderzeug 20 eine Mehrzahl von durch die zentrale Steuereinheit 202 betreibbaren Aktoren und/oder Arbeitsgeräte 210 zugeordnet, welche übliche Tätigkeiten im Betrieb des Flurförderzeugs 20 ausführen, beispielsweise ein Antrieb und eine Lenkung davon, oder Tätigkeiten im Zusammenhang mit der Handhabung von Objekten. Hierbei kann es sich beispielsweise um Manipulatoren oder Komponenten von Hubgerüsten, Seitenschubrahmen oder Ähnlichem handeln. Zuletzt umfasst das Flurförderzeug 20 noch wenigstens eine Sensoreinheit 212 zum Erfassen von Betriebsparametern des Flurförderzeugs 20 und/oder Eigenschaften der Umgebung des Flurförderzeugs 20, welche ebenfalls betriebsmäßig mit der zentralen Steuereinheit 202 gekoppelt sind. Hierbei ist das Flurförderzeug 20 dazu eingerichtet, wenigstens zeitweise mittels der Steuereinheit 202 und den von ihr angesteuerten Aktoren 210 auf Grundlage der von den Sensoreinheiten 212 gelieferten Daten autonom betrieben zu werden, um über die Kommunikationseinheit 204 übertragene Arbeitsanweisungen auszuführen, welche insbesondere von dem Lagerverwaltungssystem 40 stammen können.

Die entfernte Bedieneinrichtung 30 umfasst ebenfalls eine Steuereinheit 302, welche wenigstens die im Rahmen des erfindungsgemäßen Verfahrens anfallenden Daten verarbeitet, wobei die Bedieneinrichtung 30 hardwaremäßig beispielsweise durch einen üblichen PC mit erweiterter Funktionalität gebildet sein kann. Insbesondere umfasst hierzu die entfernte Bedieneinrichtung 30 ebenfalls eine entsprechende Kommunikationseinheit 304, mit welcher eine bidirektionale Datenverbindung mit der Kommunikationseinheit 204 des Flurförderzeugs 20 hergestellt werden kann, über die zum einen Daten der optischen Kamera 206 für eine Darstellung auf einer Anzeige 306 der entfernten Bedieneinrichtung 30 in die eine Richtung und mittels einer Bedieneinheit 308 der entfernten Bedieneinrichtung 30 durch einen Bediener eingegebene Steuerbefehle in die andere Richtung kommuniziert werden können.

Hierbei können neben den bereits angesprochenen von der Kamera 206 aufgenommenen Bildern auch noch weitere Daten auf der Anzeigeeinheit 306 angezeigt werden, beispielsweise aufbereitete Sensordaten in für einen menschlichen Bediener geeigneter Weise, die durch die Steuereinheit 302 der entfernten Bedieneinrichtung 30 zu diesem Zweck vorverarbeitet worden sind. Hierbei könnte beispielsweise an eine schematische Karte einer von dem Flurförderzeug 20 befahrenen Logistikeinrichtung gedacht werden, in welcher die Position des Flurförderzeugs 20 sowie ggf. weiterer mit Transpondern ausgerüsteter Verkehrsteilnehmer schematisch dargestellt wird.

Weiterhin sei noch auf das Lagerverwaltungssystem 40 verwiesen, mittels welchem über eine weitere Kommunikationseinheit 402 Daten bezüglich der oben angesprochenen Arbeitsanweisungen an das Flurförderzeug 20 übertragen werden können und die ggf. für eine weitere Datenübertragung an die entfernte Bedieneinrichtung 30 zur stärkeren Integration des Systems 10 eingerichtet sein kann. Lediglich vereinfacht ist ferner ein weiteres Flurförderzeug 20' angedeutet, welches ebenfalls in gleicher Weise mittels der entfernten Bedieneinrichtung 30 ferngesteuert werden kann und mit dem Lagerverwaltungssystem 40 in Datenaustausch stehen kann. Indem mehrere Flurförderzeuge 20, 20' über ein einzelnes Lagerverwaltungssystem 40 und eine einzelne entfernte Bedieneinrichtung 30 ansteuerbar sind, können in dem erfindungsgemäßen System 10 weitere vorteilhafte Synergien erzielt werden.

Ein lediglich zur Erläuterung dienendes und vorliegend nicht beanspruchtes Verfahren, das mit dem System 10 aus Figur 1 durchgeführt werden kann, wird nun ferner anhand des Flussdiagramms aus Figur 2 im Folgenden erläutert. Zunächst einmal wird bei Schritt S0 durch das Lagerverwaltungssystem 40 eine Arbeitsanweisung an das Flurförderzeug 20 übersendet, welche dieses in Schritt S1 in autonomer Weise abarbeitet. Währenddessen wird gemäß Schritt S2 durch die wenigstens eine Sensoreinheit 212 wenigstens ein Betriebsparameter des Flurförderzeugs 20 oder eine Eigenschaft der Umgebung des Flurförderzeugs 20 erfasst, wobei beispielsweise eine entsprechende Erfassung in einer getakteten Weise mit einer vorbestimmen oder anpassbaren Frequenz stattfinden kann.

Bei Schritt S3 werden die derart durch die wenigstens eine Sensoreinheit 212 erfassten Daten mit wenigstens einem vorbestimmen Kriterium verglichen, wenn dieses Kriterium nicht vorliegt (N), so wird bis zur nächsten Erfassung zu Schritt S2 zurückgesprungen, während bei einer Erfüllung des entsprechenden Kriteriums (Y) durch die Sensordaten zu Schritt S4 übergegangen wird, in welchem das Flurförderzeug 20 in einen ferngesteuerten Modus umgeschaltet wird.

Über diese Umschaltung wird der Bediener der entfernten Bedieneinrichtung 30 in geeigneter Weise auf der Anzeigeeinheit 306 informiert, sodass er die Bedienung von wenigstens einem Aktor und/oder Arbeitsgerät 210 des Flurförderzeugs 20 mittels der Bedieneinheit 308 übernehmen kann, wobei die entsprechenden Steuerbefehle wie bereits angesprochen über die beiden Kommunikationseinheiten 304 und 204 übertragen und von der zentralen Steuereinheit 202 des Flurförderzeugs 20 zur Ansteuerung des entsprechenden Aktors bzw. Arbeitsgeräts 210 verarbeitet werden.

Nachdem der entsprechende Vorgang aus Schritt S5 von dem menschlichen Bediener abgeschlossen worden ist, kann er bei Schritt S6 das Flurförderzeug 20 anweisen, wieder in den autonomen Betrieb überzugehen, was in anderen Varianten dieses Ablaufs im Übrigen auch anhand von Daten der Sensoren 212 und einer geeigneten Verarbeitung der zentralen Steuereinheit 202 des Flurförderzeugs automatisiert stattfinden kann, wenn erfasst wird, dass der entsprechende manuell fernzusteuernde Vorgang abgeschlossen worden ist. Daraufhin kehrt das Flurförderzeug 20 erneut in einen autonomen Betrieb zurück, sodass der Prozess bei Schritt S1 von neuem beginnen kann.

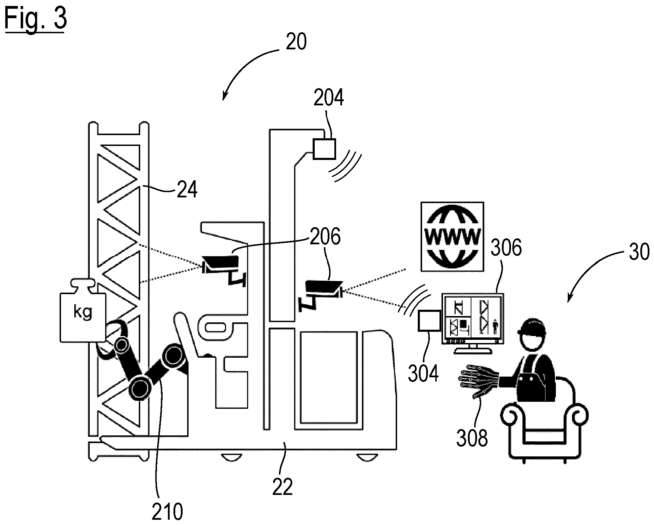

Zuletzt ist in Figur 3 rein schematisch eine mögliche Ausführungsform des Flurförderzeugs 20 sowie der entfernten Bedieneinrichtung 30 des Systems 10 aus Figur 1 dargestellt, wobei es sich bei dem Flurförderzeug 20 um einen Vertikal-Kommissionierstapler handelt, wie er üblicherweise in Hochregallagern zum Einsatz kommt. Hierbei ist neben den beiden Kameras 206, welche beispielsweise auch als 3D-Kameras oder 3D-Scanner ausgebildet sein können, auch noch die Kommunikationseinheit 204 sowie ein als Manipulator 210 ausgebildetes Arbeitsgerät dargestellt, welche in geeigneter Weise dem Fahrzeugkörper 22 bzw. dem Hubgerüst 24 des Flurförderzeugs 20 zugeordnet sind.

Andererseits ist die entfernte Bedieneinrichtung 30 in der vorliegenden Ausführungsform derart gebildet, dass sie eine Anzeigeeinheit 306 in Form eines üblichen Computermonitors sowie eine auf die Kommunikationseinheit 204 des Flurförderzeugs 20 abgestimmte eigene Kommunikationseinheit 304 umfasst, wobei die Bilder der beiden Kameras 206 wahlweise einzeln oder gleichzeitig nach Vorgabe des Bedieners der entfernten Bedieneinrichtung 30 angezeigt werden können. Alternativ könnte die Anzeigeeinheit beispielsweise auch als 3D-Datenbrille ausgeführt sein.

Die Bedieneinheit 308 ist hingegen in dem vorliegenden Ausführungsbeispiel durch einen Datenhandschuh gebildet, mittels welchem der Manipulator 210 des Flurförderzeugs 20 fernsteuerbar ist, um auch unregelmäßig geformte Waren oder Gegenstände komfortabel aufnehmen zu können.

Es sei an dieser Stelle festgehalten, dass die in Figur 3 dargestellte Ausführungsform lediglich ein illustratives Beispiel ist und hinsichtlich der Gestaltung der Lasttransportvorrichtung, des Aktors 210 sowie der Bedieneinheit 308 zahlreiche Möglichkeiten zur Modifikation oder Ergänzung bestehen.

## Patentansprüche

1. System (10) zum Durchführen von Arbeitsabläufen in einem Logistikumfeld, umfassend:
- eine Lasttransportvorrichtung (20), umfassend:
∘ eine zentrale Steuereinheit (202);
∘ wenigstens eine Kommunikationseinheit (204);
∘ wenigstens eine optische Kamera (206);
∘ eine Mehrzahl von durch die zentrale Steuereinheit (202) betreibbaren Aktoren und/oder Arbeitsgeräten (210); und
∘ wenigstens eine Sensoreinheit (212) zum Erfassen von Betriebsparametern der Lasttransportvorrichtung (20) und/oder Eigenschaften der Umgebung der Lasttransportvorrichtung (20), welche betriebsmäßig mit der zentralen Steuereinheit (202) gekoppelt ist;
wobei die Lasttransportvorrichtung (20) dazu eingerichtet ist, wenigstens zeitweise anhand von über die Kommunikationseinheit (204) übertragenen Arbeitsanweisungen mittels der zentralen Steuereinheit (202) und den Aktoren in einem autonomen Modus betrieben zu werden; sowie
- eine von der Lasttransportvorrichtung (20) entfernte Bedieneinrichtung (30), umfassend:
o eine Kommunikationseinheit (304), welche mit der Kommunikationseinheit (204) der Lasttransportvorrichtung (20) in bidirektionaler Datenverbindung zur Übertragung von Bild- und Steuerdaten steht;
∘ eine Anzeigeeinheit (306), welche dazu eingerichtet ist, von der wenigstens einen optischen Kamera (206) der Lasttransportvorrichtung (20) aufgenommene und mittels der Kommunikationseinheiten (204, 304) übertragene Bilddaten anzuzeigen; und
o eine Bedieneinheit (308), welche dazu eingerichtet ist, Steuerbefehle von einem Bediener entgegenzunehmen, welche daraufhin mittels der Kommunikationseinheiten (204, 304) zu der Lasttransportvorrichtung (20) übertragen werden,
**dadurch gekennzeichnet, dass** die zentrale Steuereinheit (202) der Lasttransportvorrichtung (20) ferner dazu eingerichtet ist, auf Grundlage von durch die wenigstens eine Sensoreinheit (212) vorgenommenen Erfassungen und wenigstens einem vorbestimmten Kriterium die Lasttransportvorrichtung (20) von dem autonomen Modus in einen ferngesteuerten Modus zu überführen, in welchem der Betrieb die Lasttransportvorrichtung (20) anhand von an der entfernten Bedienvorrichtung (30) eingegebenen Steuerbefehlen steuerbar ist,
wobei die Überführung von dem autonomen Modus in den ferngesteuerten Modus bei einem Erfassen eines ungenormtem Behälters und unter Kenntnis einer Arbeitsanweisung durchgeführt wird, den entsprechenden Behälter zu kommissionieren, so dass der Bediener mittels über die Bedieneinheit (308) eingegebene Steuerbefehle eines der Arbeitsgeräte des Lasttransportvorrichtung (20) für einen Kommissioniervorgang ansteuern kann.

2. System (10) nach Anspruch 1,
wobei die wenigstens eine Sensoreinheit (212) der Lasttransportvorrichtung (20) wenigstens einen der folgenden Typen umfassen: Positionssensoren, Lagesensoren, Sensoren zur Überwachung von Arbeitsfunktionen, optische Sensoren, akustische Sensoren und Abstandssensoren.

3. System (10) nach einem der Ansprüche 1 und 2,
wobei die von der zentralen Steuereinheit (202) betreibbaren (210) Aktoren und/oder Arbeitsgeräte wenigstens eines umfassen aus: einem Antrieb- und Lenksystem der Lasttransportvorrichtung, einem Manipulator, einem Hubgerüst und einem Seitenschubgerät.

4. System (10) nach einem der vorhergehenden Ansprüche, wobei die Bedieneinheit (308) wenigstens eines umfasst aus: einem Joystick, einem Lenkrad, einem Datenhandschuh und einem Touchscreen.

5. System (10) nach einem der vorhergehenden Ansprüche, wobei die wenigstens eine optische Kamera (206) der Lasttransportvorrichtung (20) mittels der Bedieneinheit ausrichtbar und/oder einstellbar ist.

6. System (10) nach einem der vorhergehenden Ansprüche, ferner umfassend ein Lagerverwaltungssystem (40), welches über eine Kommunikationseinheit (402) mit der Kommunikationseinheit (204) der Lasttransportvorrichtung (20) in Datenverbindung steht und dazu eingerichtet ist, Arbeitsanweisungen an die Lasttransportvorrichtung (20) zu senden.

7. System (10) nach einem der vorhergehenden Ansprüche, umfassend eine Mehrzahl von Lasttransportvorrichtungen (20, 20') und eine einzelne entfernte Bedienvorrichtung (30) sowie ggf. ein einzelnes Lagerverwaltungssystem (40), wobei die Lasttransportvorrichtungen (20, 20') einzeln selektiv in dem ferngesteuerten Modus betreibbar sind.

## Claims

1. System (10) for performing operations in a logistics environment, comprising:
- a load transport device (20), comprising:
o a central control unit (202);
o at least one communication unit (204);
∘ at least one optical camera (206);
∘ a plurality of actuators and/or working devices (210) operable by the central control unit (202); and
∘ at least one sensor unit (212) for detecting operating parameters of the load transport device (20) and/or properties of the environment of the load transport device (20), which is operatively coupled to the central control unit (202);
wherein the load transport device (20) is configured to be operated at least temporarily in an autonomous mode by means of the central control unit (202) and the actuators based on work instructions transmitted via the communication unit (204); and
- an operating device (30) remote from the load transport device (20), comprising:
∘ a communication unit (304) that is in bidirectional data communication with the communication unit (204) of the load transport device (20) for transmitting image and control data;
∘ a display unit (306) that is configured to display image data recorded by the at least one optical camera (206) of the load transport device (20) and transmitted by means of the communication units (204, 304); and
∘ an operating unit (308) that is configured to receive control commands from an operator, which are then transmitted to the load transport device (20) by means of the communication units (204, 304);
**characterised in that** the central control unit (202) of the load transport device (20) is further configured to transfer the load transport device (20) from the autonomous mode to a remote-controlled mode based on recordings made by the at least one sensor unit (212) and at least one predetermined criterion, in which remote-controlled mode the operation of the load transport device (20) can be controlled using control commands input at the remote operating device (30),
wherein the transfer from the autonomous mode to the remote-controlled mode is carried out upon detection of a non-standardized container and with knowledge of a work instruction to pick the corresponding container, so that the operator can control one of the working devices of the load transport device (20) for a picking process by means of control commands input via the operating unit (308).

2. System (10) according to Claim 1,
wherein the at least one sensor unit (212) of the load transport device (20) comprises at least one of the following types: position sensors, location sensors, sensors for monitoring work functions, optical sensors, acoustic sensors, and distance sensors.

3. System (10) according to any one of Claims 1 and 2,
wherein the actuators and/or working devices (210) operable by the central control unit (202) comprise at least one of: a drive and steering system of the load transport device, a manipulator, a lifting frame, and a sideshift device.

4. System (10) according to any one of the preceding claims,
wherein the operating unit (308) comprises at least one of: a joystick, a steering wheel, a data glove, and a touchscreen.

5. System (10) according to any one of the preceding claims,
wherein the at least one optical camera (206) of the load transport device (20) can be aligned and/or adjusted by means of the operating unit.

6. System (10) according to any one of the preceding claims,
further comprising a warehouse management system (40) which is in data communication with the communication unit (204) of the load transport device (20) via a communication unit (402) and is configured to send work instructions to the load transport device (20).

7. System (10) according to any one of the preceding claims,
comprising a plurality of load transport devices (20, 20') and a single remote operating device (30) and optionally a single warehouse management system (40), wherein the load transport devices (20, 20') are individually selectively operable in the remote-controlled mode.

## Revendications

1. Système (10) pour exécuter des processus de travail dans un environnement logistique, comprenant:
- un dispositif de transport de charge (20), comprenant:
• une unité de commande centrale (202);
• au moins une unité de communication (204);
• au moins une caméra optique (206);
• une pluralité d'actionneurs et/ou d'appareils de travail (210) qui peuvent être actionnés par l'unité de commande centrale (202); et
• au moins une unité de détection (212) pour acquérir des paramètres de fonctionnement du dispositif de transport de charge (20) et/ou des propriétés de l'environnement du dispositif de transport de charge (20), qui est fonctionnellement couplée à l'unité de commande centrale (202);
dans lequel le dispositif de transport de charge (20) est configuré pour être actionné dans un mode autonome au moins temporairement à l'aide d'instructions de travail transmises par l'intermédiaire de l'unité de communication (204) au moyen de l'unité de commande centrale (202) et des actionneurs; ainsi que
- un dispositif d'exploitation (30) éloigné du dispositif de transport de charge (20), comprenant:
• une unité de communication (304), qui est en liaison de données bidirectionnelle avec l'unité de communication (204) du dispositif de transport de charge (20) pour la transmission de données d'image et de commande;
• une unité d'affichage (306), qui est configurée pour afficher des données d'image enregistrées par la au moins une caméra optique (206) du dispositif de transport de charge (20) et transmises au moyen des unités de communication (204, 304); et
• une unité d'exploitation (308), qui est configurée pour recevoir des ordres de commande d'un opérateur, qui sont ensuite transmis au dispositif de transport de charge (20) au moyen des unités de communication (204, 304);
**caractérisé en ce que** l'unité de commande centrale (202) du dispositif de transport de charge (20) est en outre configurée pour transférer le dispositif de transport de charge (20) du mode autonome à un mode télécommandé sur la base de détections effectuées par la au moins une unité de détection (212) et d'au moins un critère prédéterminé, dans lequel le fonctionnement du dispositif de transport de charge (20) peut être commandé à l'aide d'ordres de commande introduits au niveau du dispositif d'exploitation éloigné (30),
dans lequel le transfert du mode autonome au mode télécommandé est effectué lors de la détection d'un conteneur non standard et en connaissance d'une instruction de travail pour prélever le conteneur correspondant, de sorte que l'opérateur peut commander l'un des appareils de travail du dispositif de transport de charge (20) pour un processus de prélèvement au moyen d'ordres de commande introduits par l'intermédiaire de l'unité d'exploitation (308).

2. Système (10) selon la revendication 1,
dans lequel la au moins une unité de détection (212) du dispositif de transport de charge (20) comprend au moins l'un des types suivants: détecteurs de position, détecteurs de situation, détecteurs de surveillance de fonctions de travail, détecteurs optiques, détecteurs acoustiques et détecteurs de distance.

3. Système (10) selon l'une des revendications 1 et 2,
dans lequel les actionneurs (210) et/ou les appareils de travail pouvant être actionnés par l'unité de commande centrale (202) comprennent au moins l'un parmi: un système d'entraînement et de direction du dispositif de transport de charge, un manipulateur, un mât de levage et un appareil de poussée latérale.

4. Système (10) selon l'une des revendications précédentes,
dans lequel l'unité d'exploitation (308) comprend au moins l'un parmi: un joystick, un volant, un gant de données et un écran tactile.

5. Système (10) selon l'une des revendications précédentes,
dans lequel la au moins une caméra optique (206) du dispositif de transport de charge (20) peut être alignée et/ou réglée au moyen de l'unité d'exploitation.

6. Système (10) selon l'une des revendications précédentes, comprenant en outre un système de gestion d'entrepôt (40), qui est en liaison de données par l'intermédiaire d'une unité de communication (402) avec l'unité de communication (204) du dispositif de transport de charges (20) et est configuré pour envoyer des instructions de travail au dispositif de transport de charge (20).

7. Système (10) selon l'une des revendications précédentes, comprenant une pluralité de dispositifs de transport de charge (20, 20') et un seul dispositif d'exploitation distant (30) et éventuellement un seul système de gestion d'entrepôt (40), dans lequel les dispositifs de transport de charge (20, 20') peuvent être actionnés individuellement de manière sélective en mode télécommandé.
